# EUROPEAN PATENT APPLICATION

(11) **EP 4 787 406 A1**
(43) Date of publication of application: **05.08.2026**
(21) Application number: 25155332.7
(22) Date of filing: 31.01.2025
(51) Int. Cl.: H01B 17/28, H01B 17/30, H02G 15/04, H02G 15/072, H02G 15/32

(54) **GAS-FILLED BUSHING FOR AN ELECTRICAL DEVICE, ELECTRICAL DEVICE AND METHOD FOR MANUFACTURING A GAS-FILLED BUSHING FOR AN ELECTRICAL DEVICE**

(71) Applicant: Hitachi Energy Ltd, 8050 Zürich (CH)
(72) Inventor: Sjoberg, Peter, 77143 Ludvika (SE); Jansson, Adam, 77132 Ludvika (SE); Mishawar, Prakash, 5400 Baden (CH); Cardano, Paolo, 21030 Brinzio (IT)
(74) Representative: Epping - Hermann - Fischer

(57) **Abstract**

A gas-filled bushing (1) for an electrical device (100), comprising an electrical conductor (2) and an insulator (5) surrounding the electrical conductor (2), wherein the insulator (5) is filled by a gas (4), wherein the insulator (5) comprises a first part (5) and a second part (7), wherein the first part (6) is configured to be positioned at an inner side of the electrical device (100) and the second part (7) is configured to be positioned at an outer side of the electrical device (100), further comprising a sealed compartment (7) for receiving gas in case of leakage from the first part (5) of the insulator (5), wherein the sealed compartment (7) encloses the first part (5).

## Description

The present disclosure relates to a gas-filled bushing for an electrical device. The electrical device may be a transformer, for example, a power transformer. The bushing is configured to lead through a barrier of the electrical device, particularly a wall. The wall may be a tank wall. As an example, the bushing may be an oil-to-air, a gas-to-air or an air-to-air bushing.

In gas-filled bushings, leakages occurring inside an electrical device can cause unwanted alarms which may be caused by DGA (Dissolved Gas Analysis) of an insulating fluid in the device. Furthermore, gas voids and partial discharge may occur in case of strong leakage. In addition to that, contamination of internal parts of the device or deformation due to high pressure may occur.

EP 3 096 334 B1 discloses a liquid-filled bushing for a transformer, wherein the bushing comprises a shell for sealingly containing an insulating liquid, wherein the shell is molded as a single piece from an electrically insulating polymeric material.

EP 1 134 750 A2 discloses an insulating bushing of the capacitance graded type, wound with a continuous sheet of paper or plastic material and impregnated with liquid or gaseous insulating fluid. The bushing comprises a monolithic external insulating body in the form of a glass fiber tube.

Embodiments of the disclosure relate to an improved gas-filled bushing for an electrical device and a method for manufacturing a gas-filled bushing for an electrical device.

A gas-filled bushing for an electrical device comprises an electrical conductor and an insulator surrounding the electrical conductor, wherein the insulator is filled by a gas. The insulator comprises a first part and a second part, wherein the first part is configured to be positioned at an inner side of the electrical device and the second part is configured to be positioned at an outer side of the electrical device. The bushing further comprises a sealed compartment for receiving gas in case of leakage from the first part, wherein the sealed compartment encloses the first part.

The conductor may be surrounded by a condenser core. The condenser core may be a graded condenser core to distribute the electric field and voltage gradient to prevent electrical field concentrations.

The bushing may be configured to lead through a wall of the electrical device. The wall may be grounded, wherein the conductor is electrically insulated from the wall by the insulator and additional internal insulations if applicable. The insulator may have an elongated shape, extending along a longitudinal axis, wherein the conductor extends centrally through the insulation, along the longitudinal axis. The insulator may have a tubular shape.

The insulator may be configured for being in direct contact with air when installed. It is also possible that the insulator is covered by a further insulation, such as a polymeric and/or elastomeric insulation. The further insulation may be configured to be in direct contact with air. The further insulation may comprise sheds. Further insulation may be also in the form of a compartment of metal, e.g. a GIS enclosure.

The electrical device may be a transformer, for example, a power transformer. The electrical device may alternatively be another high-voltage device, such as a switchgear or circuit breaker. The electrical device may be filled with an insulating fluid, for example, an insulating oil. In this case, the compartment is located within the insulating fluid. An electrical component which is to be electrically contacted by the bushing can be immersed in the insulating fluid.

The gas in the bushing serves to provide electrical insulation and/or dissipates heat generated during operation. The gas may be a natural gas, for example. The insulator provides a sealing for the bushing such that the gas is contained within the insulator.

By providing the compartment in addition to the first part of the insulator, a double sealing of the bushing is provided in the part that is to be positioned at an inner side of an electrical device. Thereby, leakage of gas from the bushing into an inner side of the device, particularly into an insulating fluid in a tank, can be prevented more reliably. In case of gas leakage from the first part, the leaked gas is contained in the compartment.

Prevention of a leakage inside the electrical device is of particular importance, as leakage may lead to contamination of an insulating fluid in the device, leading to a deterioration of the insulating fluid and/or to unwanted alarms of a dissolved gas analysis. Furthermore, gas voids and partial discharge may occur. A leakage may also be detrimental for a dry-type device as it leads to contamination of internal parts of the device or deformation due to high pressure. Compared to that, a leakage at an outer side of the device is not as critical as a leakage at an inner side of the device.

Thus, by the double sealing, a high level of reliability and safety is maintained for the seal also under varying conditions. Furthermore, the device can be filled by different fluids, particularly different oils or gases, offering versatility depending on the application, without a risk for contamination.

The compartment may be filled with an insulating medium. The medium may be a fluid, such as an insulating gas or insulating oil. It is also possible that the compartment is filled by another insulating medium, such as a gel or a solid insulation. The medium may be compressible or solid.

The bushing may comprise a barrier which surrounds the first part and at least partially seals the compartment. The barrier may have the form of a cap, for example.

The conductor may lead through the barrier for enabling electrical connection to an electrical device. The conductor may exit the first part of the insulator within the compartment, pass the compartment and exit the compartment through the barrier.

The compartment may be at least partially sealed by a flange-shaped portion of the bushing. The barrier may be sealingly fixed to the flange-shaped portion. In other words, the compartment may be formed mainly of fully by the barrier and the flange-shaped portion. The barrier may be sealingly connected to the conductor where the conductor passes through the barrier.

The flange-shaped portion may be configured as a flange for mounting the bushing at a wall of an electrical device. It is also possible that the compartment may be sealed by different components of the bushing. The flange marks the boundary of the outer side, particularly an air-side, and an inner side, for example, an oil-side of the bushing. The flange may be configured to be fastened to a wall of the device by bolts or screws, for example. The flange may be secured at the insulator. As an example, the flange may be secured by gluing.

The flange-shaped portion may be additionally or alternatively an integral part of a connection element for connecting the first part of the insulator to the second part of the insulator.

The insulator may comprise or consist of fiberglass or porcelain. The first part of the insulator may comprise a different material than the second part of the insulation. As an example, the second part may comprise an epoxy. It is also possible that the first part comprises an epoxy. As an example, the second part may comprise an epoxy and the first part may comprise fiberglass or porcelain or vice versa. It is also possible that both parts comprise the same material. It is further possible that the insulator is formed as a single piece.

The material of the second part may be optimized for positioning in air and may be such that additional shapes, such as sheds, may be integrated in the second part. The material of the first part and/or the barrier may be optimized for positioning in an insulating fluid of the electrical device.

Fiberglass and porcelain have a high chemical resistance to an insulating oil or other chemicals used in electrical devices, such as transformers. Furthermore, such materials have a high dielectric strength, a high mechanical strength and high thermal stability. Using such a material has the advantage that the bushing is compatible with different fluids.

It is also possible that the insulator comprises or consists of epoxy, in particular epoxy cast. In this case, sheds may be integrally formed with the insulator. When using epoxy, particularly epoxy cast, the bushing may be suitable for a limited range of voltage levels.

The barrier may be formed from an insulating material. It is also possible that the barrier is formed from a non-insulating material, such as a metal, for example.

The gas-filled bushing may comprise at least one pressure release element for enabling pressure release from the compartment to an outer side of the device. The pressure release element may be positioned in the flange-shaped portion which may partially seal the compartment.

The pressure release element prevents overpressure in the compartment in case of strong leakage of gas and prevents the barrier or other components sealing the compartment from rupturing. They pressure release element also prevents the barrier or other components from rupturing during a sudden increase of pressure, for example, in case of an explosion.

The bushing may comprise at least one further pressure release element for enabling pressure release directly to an outer side of the device, from a part of the bushing which is configured to be positioned at an outer side of the device. As an example, the pressure release element may be positioned in a connection element for connecting the first part to the second part. The pressure release element may be positioned in a sleeve-shaped portion of the connection element.

The bushing may comprise at least one pressure release element and at least one further pressure release element. The pressure release element may be configured to withstand a higher pressure than the further pressure release element. Thereby an overpressure in the compartment can be prevented and pressure can be directly released by the further pressure release element to an outer side of the device. This prevents leakage of gas from the compartment in the interior of the device.

The bushing may comprise at least one pressure sensor for detecting abnormal pressure in the bushing. The pressure sensor may be configured as a density guard. As an example, the pressure sensor may be configured to detect reduced pressure within the insulator or may be configured to detect overpressure within the compartment.

According to a further aspect of the invention, an electrical device comprises the bushing described in the foregoing. The electrical device may be a high-voltage device, such as a transformer, circuit breaker or switchgear. The electrical device comprises a wall, wherein the bushing leads through the wall. The wall may comprise a metal. The wall may be grounded. The device may be filled with an insulating liquid, such as an insulating oil or gas. The wall may be a wall of a tank being filled with the insulating liquid.

According to a further aspect of the invention, a method for manufacturing a gas-filled bushing is disclosed. The bushing may be the bushing described in the foregoing. The method comprises providing a precursor bushing comprising the insulator and a flange-shaped portion fixed to the insulator. The precursor bushing may be a functional bushing but without the compartment. The method further comprises providing a barrier and fixing the barrier to the flange-shaped portion. Thereby, the compartment can be formed.

A method of assembling a bushing with an electrical device comprises conducting the method as described in the foregoing, and the further steps of installing the bushing at a wall of the device and positioning a current transformer at the insulator at an inner side of the device.

The present disclosure comprises several aspects and embodiments. Every feature described with respect to one of the aspects and embodiments is also disclosed herein with respect to the other aspects and embodiments, even if the respective feature is not explicitly mentioned in this context.

Further features, refinements and expediencies become apparent from the following description of the exemplary embodiments in connection with the figures. In the figures, elements of the same structure and/or functionality may be referenced by the same reference signs. It is to be understood that the embodiments shown in the figures are illustrative representations and are not necessarily drawn to scale.
- Figure 1A: shows an embodiment of a bushing in a longitudinal sectional view,
- Figure 1B: shows the bushing of Fig. 1A in a further longitudinal sectional,
- Figure 1C: shows the bushing of Fig. 1A in a perspective view,
- Figure 1D: shows the bushing of Fig. 1A in a view on the top,
- Figure 2: shows a view on top of a flange of an embodiment of a bushing in a perspective view,
- Figure 3: shows an embodiment of a transformer with an installed bushing in a conceptional view,
- Figures 4A, 4B: show an embodiment of a method for manufacturing a bushing in a diagrammatic view.

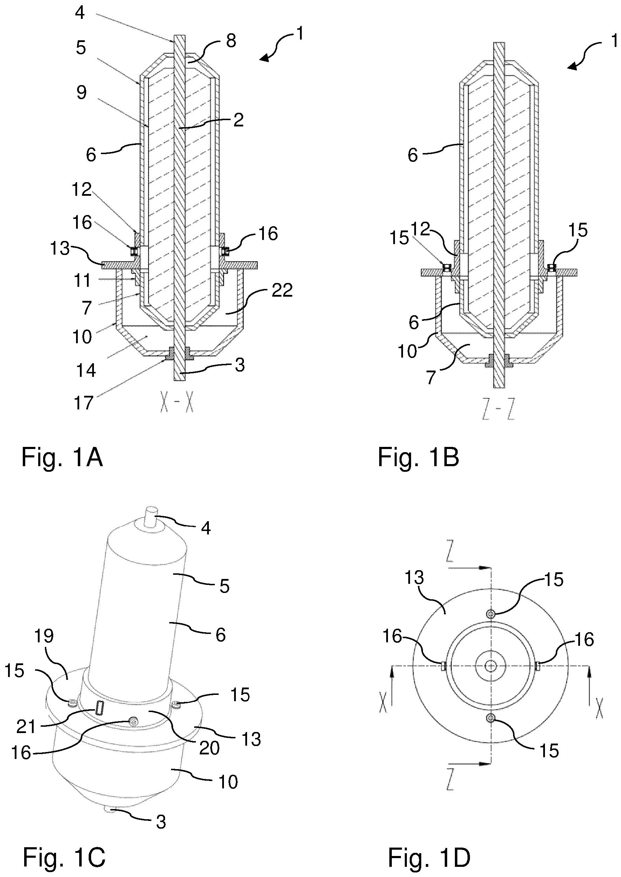

Fig. 1A shows an embodiment of a gas-filled bushing 1 in a longitudinal sectional view. Fig. 1B shows the bushing 1 in a further longitudinal sectional view, with the intersectional plane perpendicular to the one of Fig. 1B. Fig. 1C shows the bushing 1 in a perspective view and Fig. 1D shows the bushing 1 in a view on the top, with the intersectional planes X-X and Z-Z of Figs 1A and 1B indicated.

The gas-filled bushing 1 is configured for installation in the wall of an electric device. The device may be a transformer, particularly a high-voltage transformer. The bushing 1 may also be suitable for electric connection to another electrical device, particularly a high-voltage device.The wall may form a part of an outer housing of the device, wherein one side faces air, which is called air-side or outer side in the following and the opposite side faces an inner side of the device, which is called oil-side or inner side in the following.

The electrical device can be filled with an insulating fluid, such as oil or an insulating gas. In such devices, an electrical component, such as windings of a transformer, are immersed in the insulating fluid. The outer housing of the device can be a sealed tank that houses the insulating fluid. Alternatively, the gas-filled bushing 1 can also be used with a dry-type electrical device.

The gas-filled bushing 1 serves to provide an electric connection for an electrical component of the device, such as a winding of a transformer, to external electrical lines, such as overhead or underground lines or other components in a power grid. The bushing 1 provides the electric path through the wall, which is usually grounded, the bushing 1 providing suitable electric insulation from the wall.

The bushing 1 comprises a conductor 2 with an internal terminal 3 at one end for location at an inner side of an electrical device, particularly within an outer housing, and an external terminal 4 at the opposite end for location at an outer side of the device, in particular outside an outer housing, outdoor in air. The terminals 3, 4 may be integral with the conductor 2 or may be parts connected to the ends of the conductor 2.

The bushing 1 comprises an insulator 5, wherein the insulator 5 comprises a first part 6 and a second part 7. The first part 6 is configured to be positioned at an inner side of the electrical device 100. The second part 7 is configured to be located at an outer side of the device, particularly in air. The outer surface of the second part 7 may be in direct contact with air.

The first part 6 is next to the internal terminal 3 and the second part 7 is next to the external terminal 4. Both parts 5, 6 comprise the shape of a tube, extending along an axial direction. The first part 6 may comprise the shape of a cone.

The first part 6 may comprise or consist of fiberglass or porcelain as a material. Such materials have a high chemical resistance to an insulating oil or other chemicals inside an electrical device. Furthermore, such materials have a high dielectric strength, a high mechanical strength and high thermal stability. The second part 7 may comprise or consist of fiberglass or porcelain. It is also possible that the second part 7 comprises or consists of a different material than the first part 6. As an example, the second part 7 may comprise epoxy as a material. Is is also possible that the first part 6 comprises epoxy as a material.

The first part 6 and the second part 7 may be connected to each other by a first connection element 11 and a second connection element 12. The first connection elements 11 is fixed to the first part 6, in particular at a sleeve-shaped part of the connection element 11. The second connection elements 12 is fixed to the second part 7, in particular at a sleeve-shaped part of the connection element 12. The first and second connection elements 11 comprise flange-shaped portions fixed to each other. Accordingly, an interface of the first part 6 and second part 7 is formed by the connection elements 11, 12. The connection elements 11, 12 may be fixed to each other by screwing, gluing or welding, for example.

The bushing 1 comprises a flange 13 for mounting the bushing 1 to a wall of an electrical device. Accordingly, the flange 13 may abut a wall of the device at the outer side of the wall. The flange 13 may be fixed to the wall by bolts or screws, for example. The flange 13 may be provided by a flange-shaped portion 20 fixed to the bushing 1. The flange-shaped portion 20 may be a part of the second connection element 12. It is also possible that the flange 13 is formed by a separate part and fixed to the second connection element 12, for example, by gluing.

The flange 13 may comprise or consist of a metal, for example. The flange 13 marks the separation of the outer side and the inner side of the bushing 1.

The insulator 5 provides sealing of the bushing 1 to prevent gas leakage from the bushing 1. The gas serves to provide electrical insulation and/or dissipates heat generated during operation. The gas 8 may be a natural gas such as carbon dioxide or nitrogen. By such gases an eco-friendly bushing 1 can be provided. Alternatively, the gas 8 may be a synthetic gas such as SF₆, for example. The gas 8 may be present in a space between the conductor 2 and the insulator 5.

The bushing 1 may comprise a condenser core 9, wherein the gas may serve to prevent moisture ingress such that degradation of the insulating papers is prevented. The condenser core 9 may be a graded condenser core. It is also possible that the condenser core 9 is non-graded. Furthermore, a free space between the condenser core 9 and the insulator 5 and towards the internal terminal 3 and the external terminal 4 may be filled with the gas 8. It is also possible that the bushing 1 does not comprise a condenser core 9 and the fluid fills the entire space between the conductor 2 and the outer insulator 5.

The bushing 1 comprises a barrier 10 enclosing the first part 6 such that a closed compartment 14 is formed between the first part 6 and the barrier 10. The barrier 10 is fixed to the flange 13 at the circumferential edge of the barrier 10. The interface between barrier 10 and flange 13 is sealed. The conductor 2 leads through the barrier 10 and is sealingly fixed to the barrier by a bottom flange 17. Thus, the compartment 14 is sealed by the barrier 10, the flange 13 and the bottom flange 17. The barrier 10 comprises the form of a cap. The barrier 10 may be formed from an insulating material. It is also possible that the barrier 10 is formed from a non-insulating material, such as a metal, for example.

It is also possible that the bottom flange 17 is not present and the barrier 10 is directly sealingly fixed to the conductor 2. A sealing connection of the barrier 10 with the flange 13 and the conductor 2 can be achieved by methods such as gluing, welding or incorporating O-rings, for example.

At both ends of the conductor 2, the insulator 5 is directly sealingly connected to the conductor 2. It is also possible that the connection is provided by a top flange and a further bottom flange. The flanges may be of metal.

The compartment 14 may be filled with an insulating medium 22. The medium 22 may be a fluid, such as an insulating gas or insulating oil. It is also possible that the compartment 14 is filled by another insulating medium 22, such as a gel or a solid insulation. The medium may be compressible or solid.

The bushing 1 thus comprises a double sealing formed by the barrier 10 and the first part 5 at its side which is configured to be positioned at an inner side of an electrical device. Thereby, leakage of gas 8 from the bushing into an inner side of the device, particularly into an insulating fluid in a tank, can be prevented more reliably. In case of gas leaking from the first part 5, the gas 8 is contained in the compartment 10 and a secure seal can be maintained under pressure.

Prevention of a leakage inside the electrical device is of particular importance, as leakage may lead to contamination of an insulating fluid in the device, leading to a deterioration of the insulating fluid and/or to unwanted alarms of a dissolved gas analysis. Furthermore, gas voids and partial discharge may occur. A leakage may also be detrimental for a dry-type device as it leads to contamination of internal parts of the device or deformation due to high pressure. Compared to that, a leakage at an outer side of the device is not as critical as a leakage at an inner side of the device.

The bushing 1 comprises pressure release elements 15 (see Fig. 1B) for releasing pressure from the compartment 14 outside the bushing 1 and, particularly, directly to the outer side of an electrical device in air.

The shown bushing 1 comprises two such pressure release elements 15. It is also possible that the bushing 1 comprises only one or more than two pressure release elements 15. In further embodiments, the bushing 1 may not comprise any such pressure release elements 15.

The pressure release elements 15 are positioned in the flange-shaped portion 20 which seals the compartment 14. The pressure release elements 15 may be formed as rupture disks, for example. Other forms of vents are also possible. The barrier 10 is configured to withstand a higher rupture pressure than the pressure release elements 15. The pressure release elements 15 prevent overpressure in the compartment 14 in case of strong leakage of gas and prevents the barrier 10 from rupturing. They pressure release elements 15 also prevent the barrier 10 from rupturing during a sudden increase of pressure, for example, in case of an explosion. The gas will be released through the pressure release elements 15.

The bushing 1 comprises further pressure release elements 16 formed in the part of the bushing 1 which is configured to be positioned outside an electrical device. Thereby, pressure release from the insulator 5 directly in air can be provided.

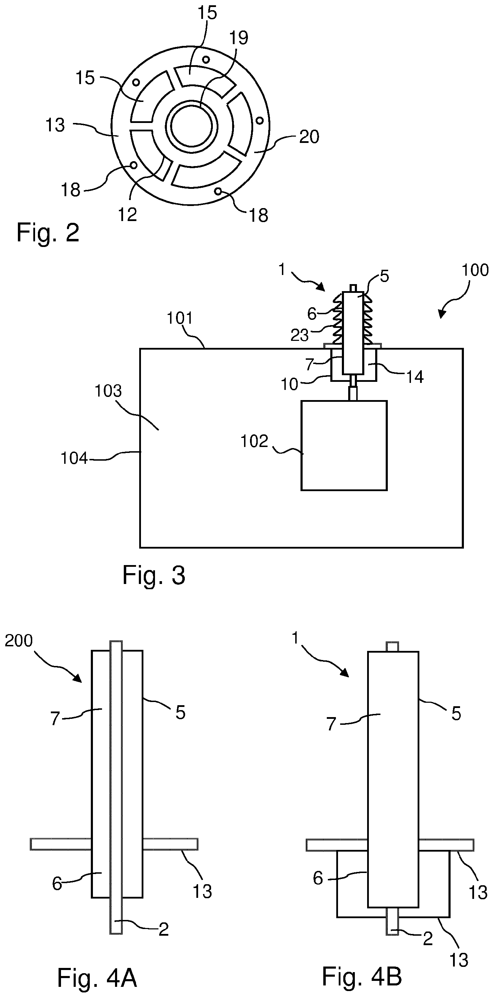

The insulator 5 may be covered by a further insulation (see Fig. 3) in this part. As an example, the further insulation may comprise silicone or epoxy. The further insulation may be in direct contact with air. The further insulation may comprise sheds. In this case, the pressure release elements 16 are configured to release the pressure via the further insulation in air.

As an example, the further pressure release elements 16 may be positioned in the sleeve-shaped portion 20 of the second connection element 11.

The shown bushing 1 comprises two further pressure release elements 16. It is also possible that the bushing 1 comprises only one or more than two further pressure release elements 16. In further embodiments, the bushing 1 may not comprise any such further pressure release elements 16. It is also possible that the bushing 1 only comprises the pressure release elements 15 and does not comprise further pressure release elements 16 or vice versa.

The further pressure release elements 16 may be formed as rupture disks, for example. Other forms of vents are also possible.

The pressure release elements 15 releasing pressure from the compartment 7 may be configured to with a higher release pressure, for example, a higher rupture pressure, than the further pressure release elements 15. This reduces the risk for any rupture of the barrier 10 and leakage of gas to the interior of an electrical device.

Thus, the bushing 1 comprises a gas overpressure safety system formed from the pressure release elements 15 and/or the further pressure release elements 16.

The bushing 1 further comprises a pressure sensor 21 to detect leakage of the bushing 1 and/or to detect overpressure. The pressure sensor 21 is located in the sleeve-shaped portion 19. The pressure sensor 21 may be in the form of a density guard. In case of a leakage of gas from the bushing 1 into the compartment 14, a reduced pressure will be detected and proper actions, such as exchange and/or repair of the bushing 1 can be started.

The pressure sensor 21 can be also positioned at a different location at the outer side of the bushing 1, for example, in a top flange. It is also possible that a pressure sensor 21 is provided for detecting overpressure in the compartment 14. As an example, a pressure sensor 21 may be provided in the\-flange-shaped portion 20 of the second connection element 12 or in the barrier 10 or in a bottom flange.

Fig. 2 shows a view on top of a second connection element 12 which also forms a flange 13 for mounting a bushing 1 at a wall of a device. The bushing 1 may be otherwise configured as the bushing 1 of Figs. 1A to 1D. The flange 13 may be mounted by fixation elements 18 in the form of bolts or screws, for example. Several pressure release elements 15 are provided in the second connection element 12. pressure release elements 15 are configured as burst discs separated by webs.

One or more further pressure release elements may be provided in the sleeve-shaped portion 19. Also the further pressure release elements may be configured as burst disks.

The bushing 1 may further comprises at least one pressure sensor to detect leakage of the bushing 1 and/or to detect overpressure. The pressure sensor may also be located in the sleeve-shaped portion 19.

Fig. 3 shows an electrical device 100 with an installed gas-filled bushing 1. The device 100 may be a transformer. The bushing 1 may be the bushing 1 as described in the embodiments of Figs. 1A-1D and/or Fig. 2.

The gas-filled bushing 1 comprises an insulator 5 with a first part 6 and a second part 7, wherein the first part 6 is positioned at an inner side (device-side) and the second part 7 is positioned at an outer side (air-side) of the device 100. Furthermore, the bushing 1 comprises a barrier 10 forming a compartment 14 enclosing the first part 6. Thereby, leakage of gas into the electrical device 100 can be reliably prevented.

The bushing 1 passes through the wall 101 of the electrical device 100 and electrically contacts an electrical component 102, such as a transformer winding. The electrical component 102 is immersed in an insulating fluid 103, such as oil. In this case, the wall 101 is a wall of a tank 104 filled with the insulating fluid 103.

The bushing 1 may be used to electrically contact a different electrical device than a transformer, particularly a high-voltage device. For example, the bushing 1 could be utilized with a circuit breaker or a switchgear. It is also possibly the device 100 is a dry-type device 100.

The insulator 5 is covered by a further insulation 23 comprising sheds. The further insulation 23 may cover the insulator 5 at the air-side, in particular the second part 7.

The further insulation may be a polymeric and/or elastomeric insulation, e.g. comprising or consisting of silicone or epoxy. The shown further insulation 23 may be present in all embodiments.

Figs. 4A and 4B show steps of a method for manufacturing a bushing 1. The bushing 1 may be the bushing of any of the foregoing embodiments.

Fig. 4A show the step of providing a precursor bushing 200 comprising an insulator 5 and a flange 13 fixed to the insulator 5. The flange 13 may be fixed to the insulator 5 by gluing, for example.

The precursor bushing 200 is a functionable bushing but does not comprise a compartment formed. The precursor bushing 200 comprises the internal parts, such as the conductor 2.

Fig. 4B shows the step of sealingly securing the barrier 10 to the flange 13 and to the conductor 2. The sealing can be provided by gluing, welding or by using O-rings, for example. The barrier 10 may be secured to the conductor 2 via a bottom flange, for example.

### Reference Signs

- 1: bushing
- 2: conductor
- 3: internal terminal
- 4: external terminal
- 5: insulator
- 6: first part
- 7: second part
- 8: gas (in bushing)
- 9: condenser core
- 10: barrier
- 11: first connection element
- 12: second connection element
- 13: flange
- 14: compartment
- 15: pressure release element
- 16: further pressure release element
- 17: bottom flange
- 18: fixation element
- 19: sleeve shaped portion
- 20: flange-shaped portion
- 21: pressure sensor
- 22: insulating medium
- 23: further insulation
- 100: electrical device
- 101: wall
- 102: transformer winding
- 103: insulating fluid
- 104: tank

## Claims

1. A gas-filled bushing (1) for an electrical device (100), comprising an electrical conductor (2) and an insulator (5) surrounding the electrical conductor (2), wherein the insulator (5) is filled by a gas (4),
wherein the insulator (5) comprises a first part (5) and a second part (7), wherein the first part (6) is configured to be positioned at an inner side of the electrical device (100) and the second part (7) is configured to be positioned at an outer side of the electrical device (100),
further comprising a sealed compartment (7) for receiving gas in case of leakage from the first part (5) of the insulator (5), wherein the sealed compartment (7) encloses the first part (5).

2. The gas-filled bushing (1) of claim 1,
wherein the compartment (7) is configured to be positioned in an insulating fluid (103) of the device (100).

3. The gas-filled bushing (1) of any of the preceding claims, comprising a barrier (10) which surrounds the first part (5) and at least partially seals the compartment (14).

4. The gas-filled bushing (1) of any of the preceding claims, wherein the barrier (10) comprises an insulating material.

5. The gas-filled bushing (1) of any of claims 3 or 4, wherein the conductor (2) leads through the barrier (10) for enabling electrical connection to the device (100).

6. The gas-filled bushing (1) of any of the preceding claims, wherein the compartment is at least partially sealed by a flange-shaped portion (20) of the bushing (1).

7. The gas-filled bushing (1) of claim 6,
wherein the flange-shaped portion (20) is configured as a flange (13) for mounting the bushing (1) at a wall of an electrical device (100).

8. The gas-filled bushing (1) of any of claims 6 or 7, wherein the flange-shaped portion (20) is an integral part of a connection element (11, 12) for connecting the first part (6) to the second part (7).

9. The gas-filled bushing (1) of any of the preceding claims, comprising at least one pressure release element (15) for enabling pressure release from the compartment (7) to an outer side of the device (100).

10. The gas-filled bushing (1) of claim 9,
wherein the compartment is at least partially sealed by a flange-shaped portion (20) of the bushing (1), wherein the pressure release element (15) is positioned in the flange-shaped portion (20).

11. The gas-filled bushing (1) of any of the preceding claims,
comprising at least one further pressure release element (16) for enabling pressure release directly from a part of the bushing (1) which is configured to be positioned at an outer side of the device (100) to the outer side of the device (100) .

12. The gas-filled bushing (1) of any of claims 9 to 11, comprising at least one pressure release element (15) and at least one further pressure release element (16),
wherein the pressure release element (15) is configured to withstand a higher pressure than the further pressure release element (16).

13. The gas-filled bushing (1) of any of the preceding claims,
comprising at least one pressure sensor (21) for detecting abnormal pressure in the bushing (1).

14. An electrical device (100) comprising the bushing (1) of any of the preceding claims,
the device (100) comprising a wall (101), wherein the bushing (1) leads through the wall (101).

15. A method for manufacturing a gas-filled bushing (1), wherein the gas-filled bushing (1) comprises an electrical conductor (2) and an insulator (5) surrounding the electrical conductor (2), wherein the insulator (5) is filled by a gas (4),
wherein the insulator (5) comprises a first part (5) and a second part (7), wherein the first part (6) is configured to be positioned at an inner side of the electrical device (100) and the second part (7) is configured to be positioned at an outer side of the electrical device (100),
further comprising a sealed compartment (7) for receiving gas in case of leakage from the first part (5) of the insulator (5), wherein the sealed compartment (7) encloses the first part (5),
wherein the method comprises providing a precursor bushing (200) comprising the insulator (5) and a flange-shaped portion (20) fixed to the insulator (5), providing a barrier (10) and fixing the barrier (10) to the flange-shaped portion (20) .
